# EUROPÄISCHE PATENTSCHRIFT

(11) **EP 1 063 746 B1**
(45) Veröffentlichungstag und Bekanntmachung des Hinweises auf die Patenterteilung: **11.09.2002**
(21) Anmeldenummer: 00112199.5
(22) Anmeldetag: 07.06.2000
(51) Int. Cl.: H02G 3/04

(54) **Gitter-Kabelrinne**
Wire-raceway
Goulotte en treillis

(30) Priorität: 26.06.1999 DE 19929458
(43) Veröffentlichungstag der Anmeldung: 27.12.2000
(73) Patentinhaber: OBO Bettermann GmbH & Co. KG., 58710 Menden (DE)
(72) Erfinder: Nickel, Wilfried, 58710 Menden (DE)
(74) Vertreter: Köchling, Conrad-Joachim

(56) Entgegenhaltungen:
- EP-A- 0 229 544
- PATENT ABSTRACTS OF JAPAN vol. 002, no. 033 (E-019), 6. März 1978 (1978-03-06) & JP 52 155393 A (HITACHI LTD), 23. Dezember 1977 (1977-12-23)

## Beschreibung

Die Erfindung betrifft eine Gitter-Kabelrinne, bestehend aus zueinander kreuzend gerichteten und in den Kreuzungspunkten miteinander verbundenen, insbesondere verschweißten, Längs- und Querdrähten, vorzugsweise in Form einer U-förmigen Kabelrinne.

Solche Gitter-Kabelrinnen sind im Stand der Technik bekannt (vgl. EP-A-229544). Dabei werden die Kabelrinnen aus Runddrähten gleicher Querschnittsabmessung zusammengesetzt. Die Querdrähte sind in Form U-förmiger Bügel ausgebildet, an deren Außenseite im Bereich der Basis und auch im Bereich der Schenkel die Längsdrähte angeschweißt sind. Auf diese Weise entstehen Gitter-Kabelrinnenabschnitte, die miteinander in beliebiger Länge zu entsprechenden Kabelbahnen verbunden werden.

Sofern solche Gitter-Kabelrinnen für unterschiedliche Belastungen ausgebildet werden sollen, so ist es üblich, für höhere Stabilitäten Quer- und Längsstäbe mit größerer Querschnittsabmessung zu verwenden. Hierdurch wird zwar die Stabilität erhöht, jedoch wird auch das Nettogewicht der entsprechenden Gitter-Kabelrinne erheblich vergrößert, was bezüglich der Herstellung aber auch bezüglich des Transportes und der Montage nachteilig ist.

Ausgehend von diesem Stand der Technik liegt der Erfindung die Aufgabe zugrunde, eine Gitter-Kabelrinne gattungsgemäßer Art zu schaffen, die eine hohe Stabilität aufweist, ohne daß sich das Nettogewicht des entsprechenden Gitter-Kabelrinnenabschnittes dermaßen erhöht, wie dies bei bisherigen Gitter-Kabelrinnen der Fall ist.

Zur Lösung dieser Aufgabe wird vorgeschlagen, daß mindestens der Boden der Kabelrinne aus mindestens drei Lagen von Drähten gebildet ist.

Bevorzugt ist dabei vorgesehen, daß alle Drähte aller Lagen gleiche Querschnittsabmessung aufweisen.

Desweiteren ist bevorzugt vorgesehen, daß mindestens der Boden der Kabelrinne vierlagig ausgebildet ist.

Besonders bevorzugt ist auch, daß die Kreuzungspunkte der Lagen übereinander ausgerichtet sind und die Lagen in den Kreuzungspunkten miteinander verbunden sind.

Zudem ist vorzugsweise vorgesehen, daß die Längsdrähte der Lagen zueinander fluchtend übereinander angeordnet sind.

Im Kombination damit aber auch allein kann vorgesehen sein, daß die Querdrähte der Lagen zueinander fluchtend übereinander angeordnet sind.

Unter Umständen kann auch vorgesehen sein, daß die Kabelrinnen auch im Bereich der Schenkel mehrlagig ausgebildet sind.

Bevorzugt kann auch vorgesehen sein, daß jede Lage jeweils aus einer Gittermatte gebildet ist.

Durch die erfindungsgemäße Ausbildung wird eine Gitter-Kabelrinne zur Verfügung gestellt, die bei geringerem Nettogewicht als nach der herkömmlichen Bauart eine entsprechende Stabilität aufweist. Dabei können mehrere Gittermatten aufeinander geschweißt werden. Die einzelnen Gittermatten sind identisch ausgebildet. Beispielsweise bei einer Gitter-Kabelrinne, die in herkömmlicher Weise lediglich aus einer Lage Querdrähten und Längsdrähten hergestellt ist und bei der die Drahtdurchmesser des Stahldrahtes 4,7 mm betragen, wird eine bestimmte Stabilität und Tragfähigkeit erreicht. Bei der erfindungsgemäßen Ausbildung wird die gleiche Stabilität oder eine noch höhere Stabilität erreicht, wenn die Matte vierlagig im Bodenbereich und zweilagig im Schenkelbereich ausgebildet ist, wobei der Drahtdurchmesser der Quer- und Längsdrähte lediglich 3,1 mm beträgt. Hierbei beträgt bei einem entsprechenden Gitter-Kabelrinnenabschnitt das vergleichbare Nettogewicht bei herkömmlicher Bauart 6,9 kg, während bei der erfindungsgemäßen Ausbildung nur ein Nettogewicht von 5,5 kg entsteht.

Hinzu kommt, daß die Fertigung vereinfacht werden kann, da sämtliche Gitter-Kabelrinnen unter Einsatz von Drähten ein und dergleichen Querschnittsabmessung hergestellt werden können. Je nach Anforderung können die Gitter-Kabelrinnen zweilagig, dreilagig oder auch vierlagig gegebenenfalls sogar noch mit mehr Lagen ausgebildet sein. Da die Schenkel im Regelfall nicht so hoch belastet sind wie die Auflageflächen und durch die lediglich zweilagig ausgebildeten Schenkel eine ausreichende Steifheit erreicht wird, kann im Regelfall auf eine über die Zweilagigkeit hinausgehende Mehrlagigkeit der Schenkel verzichtet werden.

Ausführungsbeispiele der Erfindung sind in der Zeichnung dargestellt und im folgenden näher beschrieben. Es zeigt:

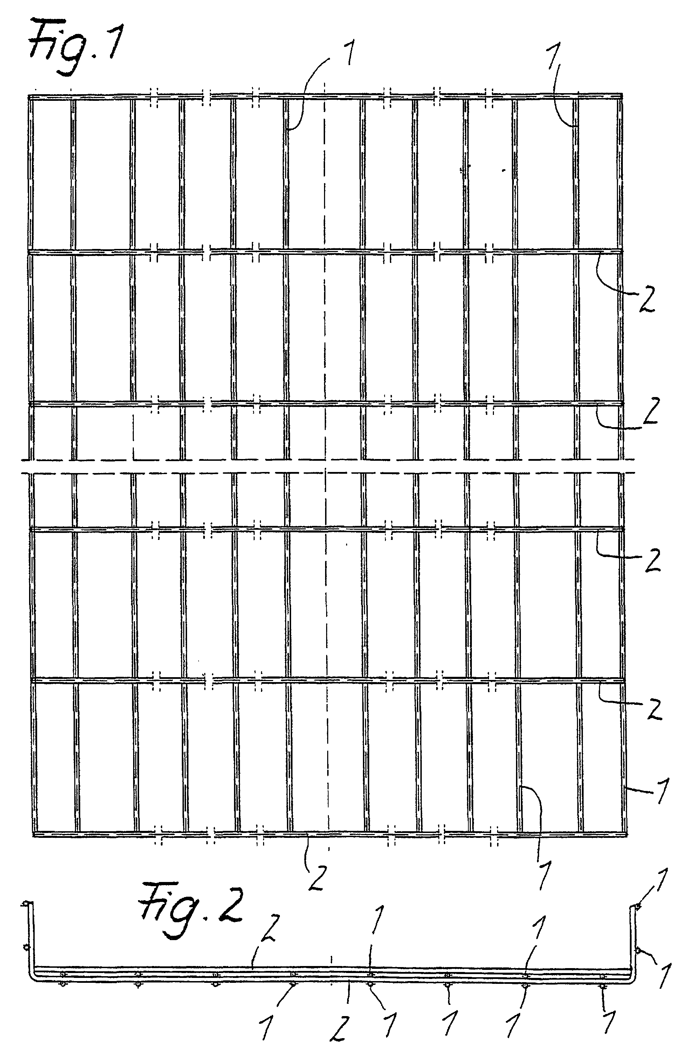

- Figur 1: eine Gitter-Kabelrinne schematisch in Draufsicht;
- Figur 2: desgleichen im Querschnitt gesehen;
- Figur 3 bis Figur 5: Teilansichten einer Gitter-Kabelrinne in der Ansicht gemäß Figur 2.

Gegenstand der Erfindung ist eine Gitter-Kabelrinne, die aus zueinander kreuzend gerichteten und in den Kreuzungspunkten miteinander verschweißten Längsdrähten 1 und Querdrähten 2 besteht.

Die Querdrähte können beispielsweise einen Abstand von 100 mm voneinander haben, während die Längsdrähte einen seitlichen Abstand von ca. 50 mm voneinander haben können.

Diese Kabelrinnen sind vorzugsweise in U-Form ausgeführt, wie aus der Querschnittsdarstellung gemäß Figur 2 ersichtlich ist. Entsprechend der Ausführungsform nach Figur 2 ist die Kabelrinne im Bereich ihres Bodens (im Bereich der Basis der U-Form) aus vier Lagen von Drähten gebildet, wobei jeweils die Längsdrähte 1 unter Zwischenlage einer Lage von Querdrähten 2 exakt übereinander ausgerichtet angeordnet sind und über den unteren Querdrähten 2 eine weitere Lage von Querdrähten mit exakter Übereinanderanordnung der Querdrähte 2 vorgesehen ist. Insgesamt entsteht so eine vierlagige Ausbildung im Bodenbereich und eine zweilagige Ausbildung im Schenkelbereich der Kabelrinne.

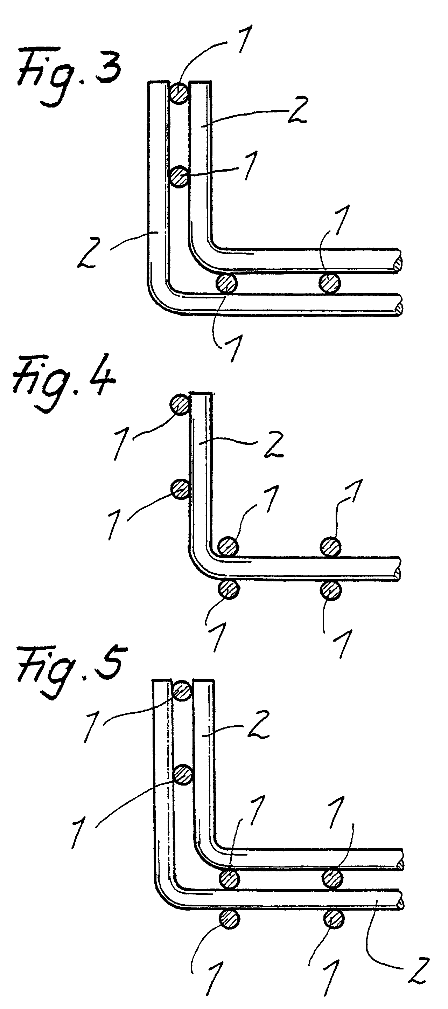

Bei der Ausführungsform nach Figur 3 ist eine Dreilagigkeit im Bodenbereich und im Schenkelbereich der Kabelrinne vorgesehen. Bei der Ausführungsform nach Figur 4 ist ebenfalls eine Dreilagigkeit, allerdings nur im Bodenbereich, vorgesehen. Dabei sind an die Querdrähte 2 jeweils unterseitig und oberseitig Längsdrähte 1 angeschlossen. Die Längsdrähte der Lagen liegen jeweils exakt übereinander. Bei allen Ausführungsformen liegen die Kreuzungspunkte exakt übereinander, so daß eine Verbindung und Verschweißung in diesen Kreuzungspunkten über alle Lagen erfolgen kann.

Bei der Ausführungsform nach Figur 5 ist eine vierlagige Ausbildung mit jeweils zwei Lagen von Querdrähten und zwei Lagen von Längsdrähten 2 bzw. 1 vorgesehen, wobei im Bodenbereich eine Vierlagigkeit und im Schenkelbereich eine Dreilagigkeit vorgesehen ist.

Mit der erfindungsgemäßen Ausbildung ist es bei Verwendung gleicher Drähte und Drahtstärken möglich, mit relativ geringer Gewichtszunahme Gitter-Kabelrinnen höherer Stabilität kostengünstig zu fertigen.

Die Erfindung ist nicht auf die Ausführungsbeispiele beschränkt, sondern im Rahmen der Offenbarung vielfach variabel.

Alle neuen, in der Beschreibung und/oder Zeichnung offenbarten Einzel- und Kombinationsmerkmale werden als erfindungswesentlich angesehen.

## Patentansprüche

1. Gitter-Kabelrinne, bestehend aus zueinander kreuzend gerichteten und in den Kreuzungspunkten miteinander verbundenen, insbesondere verschweißten, Längs- (1) und Querdrähten (2), vorzugsweise in Form einer U-förmigen Kabelrinne, **dadurch gekennzeichnet, daß** mindestens der Boden der Kabelrinne aus mindestens drei Lagen von Drähten (1,2) gebildet ist.

2. Gitter-Kabelrinne nach Anspruch 1, **dadurch gekennzeichnet, daß** alle Drähte (1,2) aller Lagen gleiche Querschnittsabmessung aufweisen.

3. Gitter-Kabelrinne nach Anspruch 1 oder 2, **dadurch gekennzeichnet, daß** mindestens der Boden der Kabelrinne vierlagig ausgebildet ist.

4. Gitter-Kabelrinne nach einem der Ansprüche 1 bis 3, **dadurch gekennzeichnet, daß** die Kreuzungspunkte der Lagen übereinander ausgerichtet sind und die Lagen in den Kreuzungspunkten miteinander verbunden sind.

5. Gitter-Kabelrinne nach einem der Ansprüche 1 bis 4, **dadurch gekennzeichnet, daß** die Längsdrähte (1) der Lagen zueinander fluchtend übereinander angeordnet sind.

6. Gitter-Kabelrinne nach einem der Ansprüche 1 bis 5, **dadurch gekennzeichnet, daß** die Querdrähte (2) der Lagen zueinander fluchtend übereinander angeordnet sind.

7. Gitter-Kabelrinne nach einem der Ansprüche 1 bis 6, **dadurch gekennzeichnet, daß** die Kabelrinnen auch im Bereich der Schenkel mehrlagig ausgebildet sind.

8. Gitter-Kabelrinne nach einem der Ansprüche 1 bis 7, **dadurch gekennzeichnet, daß** jede Lage jeweils aus einer Gittermatte gebildet ist.

## Claims

1. A wire mesh cable tray, consisting of longitudinal wires (1) and transverse wires (2) that are arranged to intersect and are connected, in particular welded, to one another at the intersection points, preferably in the form of a U-shaped cable tray,
**characterised in that** at least the base of the cable tray is formed from at least three layers of wires (1, 2).

2. A wire mesh cable tray according to Claim 1,
**characterised in that** all wires (1, 2) of all layers have identical cross-sectional dimensions.

3. A wire mesh cable tray according to Claim 1 or 2,
**characterised in that** at least the base of the cable tray is constructed in four layers.

4. A wire mesh cable tray according to one of Claims 1 to 3,
**characterised in that** the intersection points of the layers are aligned one above the other and the layers are connected to one another at the intersection points.

5. A wire mesh cable tray according to one of Claims 1 to 4,
**characterised in that** the longitudinal wires (1) of the layers are disposed one above the other to align with one another.

6. A wire mesh cable tray according to one of Claims 1 to 5,
**characterised in that** the transverse wires (2) of the layers are disposed one above the other to align with one another.

7. A wire mesh cable tray according to one of Claims 1 to 6,
**characterised in that** the cable trays are also constructed in several layers in the region of the sides.

8. A wire mesh cable tray according to one of Claims 1 to 7,
**characterised in that** each layer is formed from a wire mesh mat in each case.

## Revendications

1. Goulotte en treillis, composée de fils métalliques longitudinaux (1) et transversaux (2) tournés les uns vers les autres en se croisant et reliés entre eux, notamment soudés, dans les points d'intersection, de préférence en forme d'une goulotte en forme de U, **caractérisée en ce qu'**au moins le fond de la goulotte est formé d'au moins trois couches de fils métalliques (1, 2).

2. Goulotte en treillis selon la revendication 1, **caractérisée en ce que** tous les fils métalliques (1, 2) de toutes les couches présentent la même dimension en coupe transversale.

3. Goulotte en treillis selon la revendication 1 ou 2, **caractérisée en ce qu'**au moins le fond de la goulotte est formé de quatre couches.

4. Goulotte en treillis selon l'une des revendications 1 à 3, **caractérisée en ce que** les points d'intersection des couches sont superposés et que les couches sont reliées entre elles dans les points d'intersection.

5. Goulotte en treillis selon l'une des revendications 1 à 4, **caractérisée en ce que** les fils métalliques longitudinaux (1) des couches sont placés les uns au-dessus des autres en alignement.

6. Goulotte en treillis selon l'une des revendications 1 à 5, **caractérisée en ce que** les fils métalliques transversaux (2) des couches sont placés les uns au-dessus des autres en alignement.

7. Goulotte en treillis selon l'une des revendications 1 à 6, **caractérisée en ce que** les goulottes sont formées en plusieurs couches aussi dans la partie des montants.

8. Goulotte en treillis selon l'une des revendications 1 à 7, **caractérisée en ce que** chaque couche est respectivement formée d'une natte en treillis.
